# EUROPÄISCHE PATENTSCHRIFT

(11) **EP 2 807 280 B1**
(45) Veröffentlichungstag und Bekanntmachung des Hinweises auf die Patenterteilung: **06.04.2016**
(21) Anmeldenummer: 13701956.8
(22) Anmeldetag: 22.01.2013
(51) Int. Cl.: C21D 9/60, C23C 2/28, H05B 6/40

(54) **VERFAHREN ZUM VEREDELN EINER METALLISCHEN BESCHICHTUNG AUF EINEM STAHLBAND**
METHOD FOR REFINING A METAL COATING ON A STEEL STRIP
PROCÉDÉ D'AFFINEMENT D'UN REVÊTEMENT MÉTALLIQUE SUR UNE BANDE D'ACIER

(30) Priorität: 23.01.2012 DE 102012100509
(43) Veröffentlichungstag der Anmeldung: 03.12.2014
(73) Patentinhaber: ThyssenKrupp Rasselstein GmbH, 56626 Andernach (DE)
(72) Erfinder: MATUSCH, Dirk, 56567 Neuwied (DE); SAUER, Reiner, 56566 Neuwied (DE); OBERHOFFER, Helmut, 56727 St. Johann (DE); THOMAS, Rainer, 56818 Kletten (DE); OPPER, Markus, 56564 Neuwied (DE)
(74) Vertreter: Charrier, Rapp & Liebau
(86) Internationale Anmeldenummer: PCT/EP2013/051077
(87) Internationale Veröffentlichungsnummer: WO 2013/110577

(56) Entgegenhaltungen:
- EP-A2- 0 921 709
- GB-A- 922 714
- US-A- 2 502 770
- US-A1- 2009 065 103
- US-B1- 6 231 695
- IRESON R C J: "VARIABLE WIDTH INDUCTOR FOR TRANSVERSE FLUX INDUCTION ANNEALING OF STRIP", STEEL TIMES, FUEL & METALLURGICAL JOURNALS LTD. LONDON, GB, Bd. 222, Nr. 9, 1. September 1994 (1994-09-01), Seite 352,354, XP000467512, ISSN: 0039-095X

## Beschreibung

Die Erfindung betrifft ein Verfahren zum Veredeln einer metallischen Beschichtung auf einem Stahlband oder Stahlblech nach dem Oberbegriff des Anspruchs 1 sowie eine Vorrichtung zum Aufbringen einer metallischen Beschichtung auf ein Stahlband, insbesondere eine Bandverzinnungsanlage, nach dem Oberbegriff des Anspruchs 10.

Bei der Herstellung von galvanisch beschichteten Stahlbändern, beispielsweise bei der Herstellung von Weißblech, ist es bekannt, die Korrosionsbeständigkeit der Beschichtung durch ein Aufschmelzen der Beschichtung nach dem galvanischen Beschichtungsvorgang zu erhöhen. Hierzu wird die auf das Stahlband galvanisch abgeschiedene Beschichtung auf eine über dem Schmelzpunkt des Beschichtungsmaterials liegende Temperatur erhitzt und anschließend in einem Wasserbad abgeschreckt. Durch das Aufschmelzen der Beschichtung erhält die Oberfläche der Beschichtung ein glänzendes Aussehen und die Porösität der Beschichtung wird vermindert, wodurch sich deren Korrosionsbeständigkeit erhöht und ihre Durchlässigkeit für aggressive Stoffe, beispielsweise organische Säuren, vermindert.

Das Aufschmelzen der Beschichtung kann beispielsweise durch induktive Erhitzung beschichteten Stahlbands erfolgen. Aus der DE 1 186 158-A sowie GB 922 714 oder US 2 502 770 ist bspw. eine Anordnung zum induktiven Erwärmen von metallischen Bändern für das Aufschmelzen von insbesondere elektrolytisch aufgebrachten Beschichtungen, wie z.B. Zinnschichten auf Stahlbändern, bekannt. Diese Anordnung weist mehrere Rollen auf, über welche das beschichtete Band geführt wird, sowie mehrere gruppenweise hintereinander angeordnete und das sich bewegende Band umfassende Induktionsspulen, mit denen das beschichtete Band induktiv auf Temperaturen oberhalb der Schmelztemperatur des Beschichtungsmaterials erhitzt wird, um die Beschichtung aufzuschmelzen. Um zu erreichen, dass die Aufschmelztemperatur gleichförmig über die gesamte Breite des Bands erreicht wird, sind an den Bandkanten des beschichteten Bands zusätzliche Induktoren mit linsenförmig wirkenden Heizleitern angeordnet. Durch diese Maßnahme soll verhindert werden, dass die Temperatur des beschichteten Bands mit den Induktionsspulen auf Temperaturen weit oberhalb der Schmelztemperatur des Beschichtungsmaterials erhitzt werden muss, um die Beschichtung gleichförmig über die gesamte Breite des Bands aufzuschmelzen. Dadurch soll wiederum die Ausbildung einer Legierungszwischenschicht vermieden werden, welche sich aus Eisenatomen und Atomen des Beschichtungsmaterials, bspw. Zinn, zusammen setzt.

Bei den bekannten Verfahren zum Aufschmelzen von metallischen Beschichtungen auf Stahlbändern oder -blechen wird in der Regel das gesamte Stahlband -bzw. Blech, einschließlich der aufgebrachten Beschichtung, auf Temperaturen oberhalb der Schmelztemperatur des Beschichtungsmaterials erwärmt und anschließend, beispielweise in einem Wasserbad, wieder auf Normaltemperatur abgekühlt. Hierfür ist ein erheblicher Energiebedarf notwendig.

Hiervon ausgehend liegt der Erfindung die Aufgabe zugrunde, ein Verfahren sowie eine Vorrichtung zum Veredeln einer metallischen Beschichtung auf einem Stahlband oder -blech aufzuzeigen, welche im Vergleich zu den bekannten Verfahren und Vorrichtungen eine wesentlich energieeffizientere Behandlung des beschichteten Stahlbands ermöglichen. Das Verfahren und die Vorrichtung sollen ferner eine erhöhte Korrosionsstabilität der erfindungsgemäß behandelten Beschichtung auch bei dünnen Beschichtungsauflagen erzielen.

Gelöst werden diese Aufgaben mit einem Verfahren mit den Merkmalen des Anspruchs 1 sowie mit einer Vorrichtung mit den Merkmalen des Anspruchs 10. Bevorzugte Ausfiihrungsformen des erfindungsgemäßen Verfahrens und der Vorrichtung sind in den Unteransprüchen angegeben.

Bei dem erfindungsgemäßen Verfahren wird die metallische Beschichtung zweckmäßig über ihre gesamte Dicke durch Erhitzen auf eine Temperatur oberhalb der Schmelztemperatur des Beschichtungsmaterials aufgeschmolzen, wobei das Erhitzen durch elektromagnetische Induktion mittels eines Induktionsofens mit wenigstens einer Induktionsspule bzw. eines Induktors erfolgt. Die dabei erreichte maximale Temperatur der Beschichtung wird im folgenden als Maximaltemperatur bezeichnet. Nach der induktiven Erhitzung wird die Temperatur der Beschichtung über eine Haltezeit auf eine Temperatur oberhalb der Schmelztemperatur des Beschichtungsmaterials gehalten, bevor das beschichtete Stahlband in einer Kühleinrichtung auf eine unterhalb der Schmelztemperatur liegende Abschrecktemperatur abgeschreckt wird. Als Haltezeit wird dabei die Zeitspanne betrachtet, in der die Temperatur der Beschichtung oberhalb der Schmelztemperatur des Beschichtungsmaterials liegt. Die Haltezeit wird dabei durch Verschieben von wenigstens einer der Induktionsspulen gegenüber der Kühleinrichtung an die übrigen Prozessparameter, insbesondere die Maximaltemperatur, die Bandgeschwindigkeit und die Dicke der Beschichtung, angepasst, um die Beschichtung vollständig über ihre gesamte Dicke bis zur Grenzschicht zum Stahlband aufzuschmelzen. Dadurch können die Prozessparameter so aufeinander abgestimmt werden, dass die Beschichtung (im Wesentlichen genau) über ihre gesamte Dicke bis zur Grenzschicht zum Stahlband aufgeschmolzen wird, ohne dass das darunterliegende Stahlband wesentlich erwärmt wird. Die erfindungsgemäß vorgesehene Verschiebung wenigstens einer der Induktionsspulen gegenüber der Kühleinrichtung ermöglicht dabei die Anpassung der Haltezeit an die (durch den Produktionsprozess im galvanischen Beschichtungsverfahren vorgegebene) Bandgeschwindigkeit sowie die Dicke der im Beschichtungsverfahren aufgebrachten Beschichtung. Letztere wird zweckmäßig am Ende der Beschichtungseinrichtung mittels geeigneter Dickensensoren erfasst. Die bevorzugt einzuhaltenden Haltezeiten liegen bei den typischen Bandgeschwindigkeiten von Bandverzinnungsanlagen (welche sich zwischen 300 m/min und 700 m/min bewegen) im Bereich von 150 ms bis 800 ms. Um die Verformbarkeit des Bandes nicht zu verschlechtern, wird bevorzugt, die Haltezeit möglichst niedrig einzustellen (ohne dabei allerdings die Maximaltemperatur auf Werte oberhalb von 360°C einzustellen).

Der durch die elektromagnetische Induktion hervorgerufene Energieeintrag erfolgt bei dem erfindungsgemäßen Verfahren bevorzugt im Wesentlichen in die aufzuschmelzende Beschichtung und in die obersten Lagen des darunter liegenden Stahlbands. Die Eindringtiefe des Induktionsstroms kann dabei über die Betriebsfrequenz der Induktionsspule bzw. des Induktors gesteuert werden. Der Bereich der bei den erforderlichen Induktionsleistungen anwendbaren Frequenzen liegt dabei im Bereich der Hochfrequenz (50 kHz bis 1 MHz, wobei bevorzugt Frequenzen im Bereich von 150 kHz zur Erzielung von Eindringtiefen im Bereich 10 bis 100 µm.

Es hat sich gezeigt, dass die beschichteten Stahlbänder besonders gute Werte für ihre Korrosionsbeständigkeit aufweisen, wenn die metallische Beschichtung induktiv auf eine Maximaltemperatur von mehr als 310°C erhitzt wird, um die Beschichtung über die Haltezeit aufzuschmelzen. Als besonders vorteilhaft hat sich der Bereich von 310°C bis 360°C und besonders bevorzugt der Bereich von 320°C bis 350°C für die Maximaltemperatur erwiesen. Bei einer Erhitzung auf Temperaturen oberhalb von 360°C verschlechtert sich die Verformbarkeit der erfindungsgemäß behandelten Bänder oder Bleche aufgrund einer Reduzierung der Streckgrenze.

Durch Vergleichsversuche konnte in überraschender Weise gezeigt werden, dass sich bei Einhaltung einer Maximaltemperatur von mehr als 310°C im Wesentlichen unabhängig von der gewählten Haltezeit an der Grenzschicht zwischen der Beschichtung und dem Stahlband bzw. dem Stahlblech eine (verglichen mit der Dicke der Beschichtung) dünne Legierungsschicht ausbildet, welche aus Eisenatomen und Atomen des Beschichtungsmaterials besteht, wenn die Beschichtung vollständig über ihre gesamte Dicke bis zur Grenzschicht zum Stahlband aufgeschmolzen wird. Bei verzinnten Stahlbändern (Weißblech) bildet sich also beispielsweise an der Grenzschicht der Zinnbeschichtung zum Stahl eine sehr dünne Eisen-Zinn-Legierungsschicht (FeSn₂) aus.

Durch Messung des ATC-Wertes ("Alloy Tin Couple"-Wert), der als elektrochemischer Test ein Maß für die Porigkeit der Legierungsschicht ist, wurde fest gestellt, dass die sich durch das induktive Aufschmelzen ausbildende Legierungsschicht im Vergleich zu den Legierungsschichten die sich bei herkömmlicher Verfahrensführung (d.h. Aufschmelzung der Beschichtung in einem Glühofen bspw. durch elektrische Widerstandsheizung bei Temperaturen knapp oberhalb der Zinnschmelztemperatur von 232°C) ergeben, eine geringere Porigkeit und eine wesentlich höhere Dichte aufweisen. Es wird daher vermutet, dass diese dünne und porenarme Legierungsschicht die Korrosionsstabilität besonders positiv beeinflusst. Das Verfahren nach Anspruch 2 wird daher unabhängig von den Merkmalen des kennzeichnenden Teils des Anspruchs 1 als eigenständige Erfindung angesehen.

Die Verfahrensparameter für das induktive Aufschmelzen der Beschichtung, insbesondere die Maximaltemperatur und die Haltezeit, werden zweckmäßig so gewählt und an die Bandgeschwindigkeit und die Dicke der Beschichtung angepasst, dass nur ein Teil der Beschichtung mit den Eisenatomen des Stahlbands bzw. des Stahlblechs legiert und daher nach dem Aufschmelzen noch unlegierte Beschichtung und darunter liegend eine dünne Legierungsschicht vorhanden ist. Die Dicke der Legierungsschicht entspricht dabei, je nach gewählten Prozessparametern, in etwa einem Flächengewicht bzw. einer Auflage von nur 1,3 g/m² oder weniger. Hinsichtlich der Korrosionsstabilität und der Umformbarkeit als besonders geeignet haben sich Legierungsschichten erwiesen, die dünner als 1,0 g/m² sind und als besonders bevorzugt haben sich Legierungsschichten mit einer Dicke im Bereich von 0,05 bis 0,6 g/m² erwiesen. Bei dickeren Legierungsschichten entsprechend einer Auflage von mehr als 1,3 g/m² verschlechtert sich die Umformbarkeit des beschichteten Stahlblechs, bspw. für die Herstellung von Getränke - oder Konservendosen.

Mit dem erfindungsgemäßen Verfahren kann sicher gestellt werden, dass bspw. beim Verzinnen von Stahlblech auch bei dünnen Gesamtzinnauflagen von 1.0 g/m² oder weniger eine dünne und gleichzeitig im Wesentlichen porenfreie und damit sehr dichte Legierungsschicht bei optisch ansprechender (d.h. glänzender) Beschichtungsoberfläche erzielt wird. Die im Vergleich zur Dicke der Beschichtung sehr dünne und gleichzeitig dichte Legierungsschicht führt zu einer erhöhten Korrosionsbeständigkeit des beschichteten Stahls und zu einer verbesserten Haftung der Beschichtung auf dem Stahlband bzw. -blech. Gemäß der Erfindung wird dies dadurch ermöglicht, dass die Prozessparameter beim Aufschmelzen der Beschichtung aneinander angepasst werden können, um eine gezielte Einstellung der Dicke der sich beim Aufschmelzen der Beschichtung ausbildenden Legierungsschicht vorzunehmen. Insbesondere wird bei dem erfindungsgemäßen Verfahren nach Anspruch 1 die Dicke der sich ausbildenden Legierungsschicht von dem im bisherigen Verfahren fest eingestellten Abstand zwischen der Aufschmelzeinrichtung und der Kühleinrichtung entkoppelt. Bei dem erfindungsgemäßen Verfahren ist dagegen der Abstand der Induktionsspule zur Kühleinrichtung zweckmäßig stufenlos einstellbar, um die Haltezeit auf einen gewünschten Wert einzustellen. Über eine Anpassung der Haltezeit an die übrigen Prozessparameter, wie z.B. die Maximaltemperatur und die Dicke der auf dem Stahlband abgeschiedenen Beschichtung können schließlich die Dicke der Legierungsschicht und damit letztendlich die Materialeigenschaften des beschichteten Stahlbands, wie dessen Korrosionsbeständigkeit und Umformbarkeit, gezielt gesteuert werden. Die besten Ergebnisse konnten dabei erzielt werden, wenn die Maximaltemperatur auf Werte zwischen 310°C und 360°C und die Haltezeit zwischen 0,1 s und 1,0 s und bevorzugt zwischen 0,2 s und 0,3 s eingestellt worden ist.

Die der Erfindung zugrunde liegende Aufgabe wird weiterhin mit einer Vorrichtung zum Aufbringen einer metallischen Beschichtung auf ein Stahlband gelöst. In der Vorrichtung wird ein endloses Stahlband mit einer Bandgeschwindigkeit in einer Bandlaufrichtung bewegt und in einer Beschichtungseinrichtung elektrolytisch mit einer metallischen Beschichtung versehen. Bei der Vorrichtung kann es sich insbesondere um eine Bandverzinnungsanlage mit einer elektrolytischen Beschichtungseinrichtung handeln, in der das Stahlband mit der Bandgeschwindigkeit durch einen zinnhaltigen Elektrolyten bewegt wird, um eine Zinnschicht auf dem Stahlband abzuscheiden. In Bandlaufrichtung ist der Beschichtungseinrichtung eine Aufschmelzeinrichtung nachgeordnet, in der die Beschichtung durch induktives Erhitzen auf eine Maximaltemperatur oberhalb der Schmelztemperatur des Materials der Beschichtung aufgeschmolzen wird. Der Aufschmelzeinrichtung ist in Bandlaufrichtung eine Kühleinrichtung nachgeordnet, in der das beschichtete Stahlband auf eine unterhalb der Schmelztemperatur liegende Abschrecktemperatur abgekühlt wird. Gemäß der Erfindung ist die Aufschmelzeinrichtung gegenüber der Kühleinrichtung verschiebbar, um den Abstand zwischen der Aufschmelzeinrichtung und der Kühleinrichtung in Bandlaufrichtung auf einen gewünschten Wert einstellen zu können.

Die Aufschmelzeinrichtung umfasst dafür wenigstens eine in Bandlaufrichtung beweglich angeordnete Induktionsspule. Neben dieser beweglichen Induktionsspule kann die Aufschmelzeinrichtung auch noch weitere Induktionsspulen enthalten, welche in Bandlaufrichtung hintereinander angeordnet sind. Diese zusätzlichen Induktionsspulen können dabei örtlich bezüglich der Kühleinrichtung fixiert oder ebenfalls verschiebbar sein. Zweckmäßig ist es jedoch, in einer Anordnung von mehreren hintereinander geschalteten Induktionsspulen zumindest die letzte Induktionsspule, welche der Kühleinrichtung am nächsten liegt, oder die gesamte Spulenanordnung verschiebbar auszugestalten.

Mit der oder den Induktionsspule(n) kann das beschichtete Stahlband in einstellbaren Aufheizraten induktiv auf die Maximaltemperatur erhitzt werden. Als zweckmäßig haben sich dafür Aufheizraten zwischen 600 K/s und 1300 K/s und bevorzugt zwischen 900 K/s und 1100 K/s erwiesen.

Bei der Kühleinrichtung kann es sich um einen mit einer Kühlflüssigkeit, z.B. Wasser, gefüllten Abschrecktank handeln. Es kann jedoch auch eine andere Kühleinrichtung, z.B. eine Gebläse- oder Gaskühlung, insbesondere eine Luftkühlung, verwendet werden.

Nachfolgend wird die Erfindung anhand eines Ausführungsbeispiels unter Bezugnahme auf die begleitenden Zeichnungen näher erläutert. Die Zeichnungen zeigen:
- **Figur 1:**: schematische Darstellung einer Vorrichtung zum Aufbringen einer metallischen Beschichtung auf ein Stahlband;
- **Figur 2:**: schematische Darstellung der Aufschmelzeinrichtung und der Kühleinrichtung der Vorrichtung von Figur 1;
- **Figur 3:**: perspektive Darstellung der beweglichen Aufschmelzeinrichtung der Vorrichtung von Figur 1;

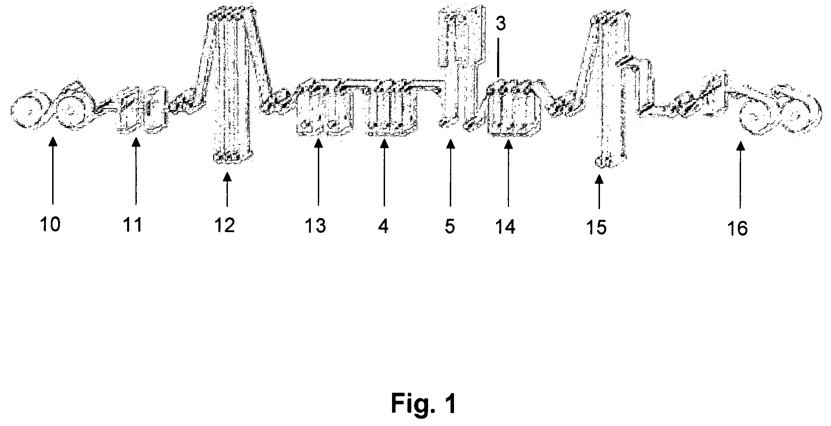

Bei der in Figur 1 schematisch dargestellten Vorrichtung handelt es sich beispielsweise um eine Bandverzinnungsanlage mit einer Beschichtungseinrichtung, in der auf ein Fein- oder Feinstblech eine Zinn-Beschichtung abgeschieden wird, indem das Stahlband mit einer Bandgeschwindigkeit v_{B} durch einen zinnhaltigen Elektrolyten geführt wird. Der Anwendungsbereich der Erfindung ist jedoch nicht auf dieses Ausführungsbeispiel beschränkt. Die Erfindung kann in entsprechender Weise bspw. auch in Verfahren zur elektrolytischen Beschichtung von Stahlbändern mit anderen Metallen, wie z.B. Zink, eingesetzt werden, um sog. spezialverzinktes Feinstblech herzustellen. Die Anwendung des erfindungsgemäßen Verfahrens ist auch nicht auf die Beschichtung von Stahlbändern in Bandverzinnungsanlagen beschränkt, sondern kann in entsprechender Weise bspw. auch bei der Tauchbeschichtung von Stahlblechen in Form von Tafeln eingesetzt werden, bei der die Metallbeschichtung nicht elektrolytisch auf das Stahlband aufgetragen wird.

Die in **Figur 1** schematisch dargestellt Bandverzinnungsanlage zur elektrolytischen Verzinnung von Stahlblech umfasst eine Abwickelgruppe 10, in der ein zu einem Fein- oder Feinstblech kalt gewalztes Stahlband von einer Rolle (Coil) abgezogen und zu einem endlosen Stahlband in einer Schweißeinrichtung 11 zusammengeschweißt wird. Das Endlosband wird in einen Schlaufenturm 12 geführt, um einen Bandvorrat zu bilden. Der vom Schlaufenturm 12 aufgenommene Bandvorrat ermöglicht auch während der notwendigen Stillstandszeiten beim Aneinanderschweißen oder später beim Trennen des beschichteten Stahlbands und Aufrollen auf fertig gewickelten Coils ein kontinuierliches Durchlaufen des Bandes durch die Bandverzinnungsanlage mit einer vorgegebenen Bandgeschwindigkeit. An den Schlaufenturm 12 schließt sich eine Vorbehandlungseinrichtung 13 und eine Beschichtungseinrichtung 4 an. In der Vorbehandlungseinrichtung 13 erfolgt eine im folgenden noch näher beschriebene Reinigung und Entfettung der Stahlbandoberfläche und iIn der Beschichtungseinrichtung 4 wird das sich mit der Bandgeschwindigkeit (v_{B}) durch die Bandverzinnungsanlage bewegende Band durch einen zinnhaltigen Elektrolyten geleitet, um eine Zinnschicht auf dem Stahlband abzuscheiden. An die Beschichtungseinrichtung 4 schließt sich in Bandlaufrichtung eine Aufschmelzeinrichtung 5 an, in der die auf dem Stahlband abgeschiedene Beschichtung auf Temperaturen oberhalb der Schmelztemperatur des Beschichtungsmaterials (diese beträgt bei Zinn 232°C) erhitzt wird, um die abgeschiedene Beschichtung aufzuschmelzen. An die Aufschmelzeinrichtung 5 schließt sich eine Kühleinrichtung 3 und eine Nachbehandlungseinrichtung 14 sowie ein zweiter Schlaufenturm 15 an. Schließlich wird das beschichtete Stahlband in einer Aufwickelgruppe 16 auf Rollen (Coils) aufgewickelt.

Das vom ersten Schlaufenturm 12 kommende, noch unbeschichtete Stahlband wird zunächst in der Vorbehandlungseinrichtung 13 einer Vorbehandlung unterzogen, bevor es in der Beschichtungseinrichtung 4 mit einer Zinnschicht versehen wird. In der Vorbehandlungseinrichtung 13 wird das unbeschichtete Stahlband zunächst entfettet und dann gebeizt. Dazu wird das noch unbeschichtete Stahlband mit der Bandgeschwindigkeit (v_{B}) durch ein alkalisches Entfettungsbad, bspw. einer Natrium-Karbonat- oder NatriumhydroxidLösung, geleitet. Das Entfettungsbad ist in regelmäßigen Abständen von Verschmutzungen, die durch Fetteintrag und Eisenabrieb erzeugt werden, zu befreien. Es hat sich gezeigt, dass für die anschließende Durchführung des erfindungsgemäßen Veredelungsverfahrens eine ausreichende Reinheit des Entfettungsbads vorliegt, wenn die Badtrübe (Badextinktion) des Entfettungsbades bei einer optischen Messung mit Licht bei einer Wellenlänge von 535 nm einen Extinktionswert von < 1 (gemäß dem Lambert-Beer-Gesetz, entsprechend einer Lichtschwächung von weniger als Faktor 10) aufweist.

Nach dem Entfetten erfolgt eine erste Spülung mit einer Spülflüssigkeit und anschließend wird das Stahlband in saurer Lösung, bspw. in einer Schwefelsäure-Lösung, gebeizt und nochmal gespült. Für die nachfolgende Durchführung des erfindungsgemäßen Veredelungsverfahrens ist es zweckmäßig, wenn das Stahlband nach dem Entfetten und Beizen mit einer Spülflüssigkeit gespült wird, die bevorzugt eine Leitfähigkeit von < 20 µS/cm aufweist.

In der sich an die Vorbehandlungseinrichtung 13 anschließende Beschichtungseinrichtung 4 wird das entfettete und gebeizte Stahlband durch ein zinnhaltiges Elektrolytbad geleitet und dort als Kathode geschaltet und zwischen zwei Reihen von Zinnanoden hindurchgeführt. Dadurch wird das Zinn der Anoden gelöst und auf dem Stahlband als Zinn-Beschichtung abgeschieden. Das Zinn kann dabei in beliebiger Dicke und, falls erforderlich, auf beiden Seiten des Stahlbandes aufgetragen werden. Die Dicke der aufgetragenen Zinnschicht liegt regelmäßig zwischen 1,0 g/m² und 5,6 g/m². Es ist jedoch auch die Beschichtung des Stahlbands mit dünneren oder mit dickeren Zinnschichten möglich.

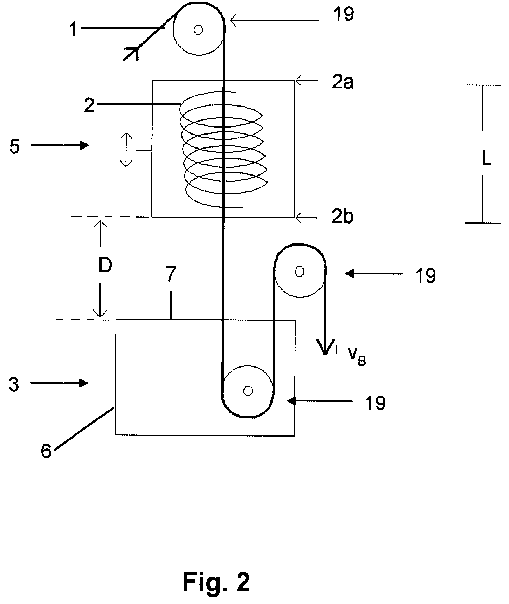

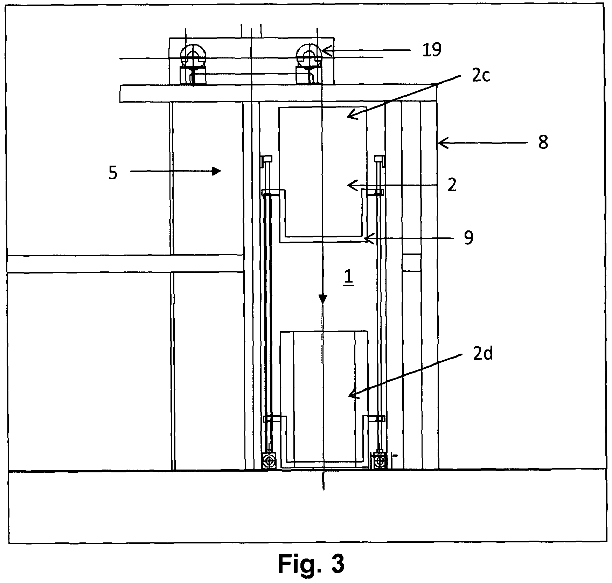

Zur Erhöhung der Korrosionsbeständigkeit des beschichteten Stahlbands wird dieses nach dem Beschichtungsvorgang in der Beschichtungseinrichtung 4 einem Veredelungsverfahren gemäß der Erfindung unterzogen. Das Veredelungsverfahren wird in der Aufschmelzeinrichtung 5 und der dieser in Bandlaufrichtung nachgeschalteten Kühleinrichtung 3 durchgeführt. Die Einzelheiten des erfindungsgemäßen Veredelungsverfahrens und der dazu verwendeten Einrichtungen wird im Folgenden im Detail unter Bezugnahme auf die Figuren 2 und 3 beschrieben.

In Figur 2 ist schematisch die Aufschmelzeinrichtung 5 und die in Bandlaufrichtung nachgeordnete Kühleinrichtung 3 gezeigt. Das mit der Bandgeschwindigkeit bewegte Stahlband wird über Umlenkrollen 19 geführt und in die Aufschmelzeinrichtung 5 und von dieser in die Kühleinrichtung 3 geleitet. Zwischen der Aufschmelzeinrichtung 5 und der Kühleinrichtung 3 läuft das bewegte Stahlband im Wesentlichen in vertikaler Richtung von oben nach unten, wie in Figur 2 gezeigt. Bei der Aufschmelzeinrichtung 5 handelt es sich um einen Induktionsofen mit wenigstens einer Induktionsspule 2. Der Induktionsofen kann auch mehrere, in Bandlaufrichtung hintereinander angeordnete Induktionsspulen beziehungsweise Induktoren umfassen. Im Folgenden wird davon ausgegangen, dass der Induktionsofen lediglich eine Induktionsspule 2 enthält. Die Induktionsspule 2 wird mit elektrischem Wechselstrom, bevorzugt im Hochfrequenz-Bereich (50 kHz bis 30 MHz) beaufschlagt und das beschichtete Stahlband 1 wird mit der Bandgeschwindigkeit (v_{B}) durch die Induktionsspule 2 bewegt. Dadurch werden in dem beschichteten Stahlband Wirbelströme induziert, welche das beschichtete Stahlband erhitzen. Um die auf das Stahlband aufgebrachte Beschichtung aufzuschmelzen, wird das beschichtete Stahlband in dem Induktionsofen auf Temperaturen oberhalb der Schmelztemperatur des Beschichtungsmaterials (Tₛ, diese beträgt bei Zinn 232°C) erhitzt. Die maximale Temperatur, die dabei erreicht wird, wird als Maximaltemperatur (peak metal temperature, PMT) bezeichnet. Es hat sich gezeigt, dass für die Durchführung des erfindungsgemäßen Veredelungsverfahrens Maximaltemperaturen zu bevorzugen sind, welche höher als 310°C und bevorzugt im Bereich zwischen 320°C und 350°C liegen. Die Maximaltemperatur kann durch die Leistung der Induktionsspule 2 gesteuert werden. Die Eindringtiefe des durch elektromagnetische Induktion erzeugten Induktionsstroms in die Oberfläche des beschichteten Stahlbands kann durch die Frequenz des elektromagnetischen Wechselstroms gesteuert werden, mit dem die Induktionsspule 2 beaufschlagt wird. Die für die Durchführung des erfindungsgemäßen Veredelungsverfahrens erforderlichen Leistungen der Induktionsspule 2 liegen im Bereich von 1500 bis 2500 kW.

Mit dem Induktionsofen kann das beschichtete Stahlband mit Aufheizraten zwischen 600 K/s und 1300 K/s auf Temperaturen oberhalb der Schmelztemperatur Tₛ des Beschichtungsmaterials erhitzt werden. Zweckmäßig werden die Aufheizraten des Induktionsofens zwischen 900 K/s und 1100 K/s eingestellt.
Die Aufschmelzeinrichtung 5(Induktionsofen) beziehungsweise die Induktionsspule 2 erstreckt sich in Bandlaufrichtung zwischen dem Spuleneingang 2a und dem Spulenausgang 2b über eine Länge L, welche zweckmäßig im Bereich von 2 bis 3m liegt. Diese Länge L stellt die effektive Heizzone dar, in der das beschichtete Stahlband in der Aufschmelzeinrichtung 5 erhitzt wird.

An die Aufschmelzeinrichtung 5 schließt sich in Bandlaufrichtung und im Abstand zur Aufschmelzeinrichtung 5 eine Kühleinrichtung 3 an. In dem zeichnerisch hier dargestellten Ausführungsbeispiel umfasst die Kühleinrichtung 3 einen mit einer Kühlflüssigkeit gefüllten Abschrecktank 6. In dem Abschrecktank 6 ist eine weitere Umlenkrolle 19 angeordnet, über welche das abgeschreckte Stahlband aus der Kühleinrichtung 3 heraus geführt wird. Der Flüssigkeitsspiegel der Kühlflüssigkeit ist in Figur 2 mit Bezugszeichen 7 gekennzeichnet. Auf der Strecke zwischen dem Spulenausgang 2b und dem Flüssigkeitsspiegel 7 kühlt die aufgeschmolzene Beschichtung zwischen der Aufschmelzeinrichtung 5 und der Kühleinrichtung 3 durch Wärmeleitung und -konvektion geringfügig ab. Da die Beschichtung in der Aufschmelzeinrichtung 5 jedoch auf Temperaturen weit oberhalb der Schmelztemperatur Tₛ erhitzt worden ist, verbleibt die aufgeschmolzene Beschichtung auf ihrem Weg zwischen der Aufschmelzeinrichtung 5 und der Kühleinrichtung 3 noch im geschmolzenen Zustand. Die Zeitdauer, die ein vorgegebener Punkt auf dem Band zwischen dem Spulenausgang 2b und dem Flüssigkeitsspiegel 7 der Kühlflüssigkeit zurücklegt, ist durch den Abstand D zwischen dem Spulenausgang 2b und dem Flüssigkeitsspiegel 7 sowie der Bandgeschwindigkeit (v_{B}) bestimmt und berechnet sich zu t_{H} = D/v_{B}. Diese Zeitspanne t_{H} wird im Folgenden als Haltezeit bezeichnet.

Wenn das Band in die Kühlflüssigkeit eintaucht, erfolgt ein rasches Abschrecken des in der Aufschmelzeinrichtung 5 erhitzten Bands auf die Temperatur der Kühlflüssigkeit, welche in der Regel im Bereich der Raumtemperatur liegt. Durch das Aufschmelzen und rasche Abschrecken der Beschichtung wird eine glänzende Oberfläche des beschichteten Bands erzeugt. Ferner wird die Haftfähigkeit der aufgebrachten Beschichtung auf dem Stahlband durch das Aufschmelzen und rasche Abschrecken erhöht.

Erfindungsgemäß ist nun vorgesehen, dass die gesamte Aufschmelzeinrichtung 5 oder zumindest eine darin angeordnete Induktionsspule 2 gegenüber der Kühleinrichtung 3 verschiebbar ist, um den Abstand D zwischen dem Spulenausgang 2b und dem Eingang der Kühleinrichtung 3, insbesondere dem Flüssigkeitsspiegel 7, auf einen gewünschten und für die Durchführung des erfindungsgemäßen Verfahrens geeigneten Wert einstellen zu können. Hierzu ist die gesamte Aufschmelzeinrichtung 5 oder zumindest deren Induktionsspule 2 beweglich in einem Rahmengestell 8 angeordnet, wie in Figur 3 gezeigt. Zweckmäßig ist die gesamte Aufschmelzeinrichtung 5 an dem Rahmengestell 8 so angeordnet, dass sie in Bandlaufrichtung stufenlos verschoben werden kann. Bei Verwendung einer Aufschmelzeinrichtung 5 mit einer Induktionsspulenreihe (bestehend aus einer Mehrzahl von in Bandlaufrichtung zweckmäßig hintereinander angeordneten Induktionsspulen) ist bevorzugt zumindest die in Bandlaufrichtung gesehen letzte Induktionsspule (also die zur Kühleinrichtung 3 benachbarte) Induktionsspule in Bandlaufrichtung verschiebbar auszubilden, um ihren Abstand zur benachbarten Kühleinrichtung 3 auf einen geeigneten Wert einstellen zu können. Der geeignete Abstand zwischen der Aufschmelzeinrichtung 5 bzw. der (letzten) Induktionsspule einer Induktionsspulenreihe wird dabei so bestimmt, dass die Beschichtung gerade so über ihre gesamte Dicke bis hin zur Grenzschicht zum Stahlband aufgeschmolzen wird, ohne dabei (durch die elektromagnetische Induktion) überschüssige Energie in die Beschichtung einzubringen.

In Figur 3 ist das Rahmengestell 8 mit der daran angeordneten Aufschmelzeinrichtung 5 (Induktionsofen) dargestellt. Die Aufschmelzeinrichtung 5 umfasst dabei ein Gehäuse 9, in dem die Induktionsspule 2 angeordnet ist. Das Gehäuse 9 ist an dem Rahmengestell 8 über Gleitschienen beweglich zwischen einer oberen Endposition 2c und einer unteren Endposition 2d verschiebbar angeordnet. Die Verschiebung des Rahmens 9 erfolgt zweckmäßig über einen motorischen Antrieb.

Mit dieser Anordnung ist es nun möglich, die Haltezeit nach dem Aufschmelzen der Beschichtung bis zum Abschrecken der aufgeschmolzenen Beschichtung in der Kühleinrichtung 3 an die übrigen Prozessparameter, wie zum Beispiel die Maximaltemperatur, die Bandgeschwindigkeit und die Dicke der in der Beschichtungseinrichtung 4 aufgebrachten Beschichtung, anzupassen. Auf diese Weise ist es möglich, die genannten Prozessparameter und die Haltezeit so einzustellen, dass die Beschichtung unter definierten Bedingungen aufgeschmolzen wird. Es wird insbesondere ermöglicht, dass die Beschichtung (gerade) über ihre gesamte Dicke bis zur Grenzschicht zum Stahlband aufgeschmolzen wird. Es hat sich gezeigt, dass ein Aufschmelzen der Beschichtung bis zur Grenzschicht zum Stahlband sehr vorteilhaft ist, weil sich dabei an der Grenzschicht zwischen der Beschichtung und dem Stahlband eine im Vergleich zur Dicke der Beschichtung dünne und gleichzeitig sehr dichte Legierungsschicht ausbildet. Diese Legierungsschicht besteht aus Eisenatomen des Stahlbands und aus den Atomen des Beschichtungsmaterials (also beispielsweise bei einer Zinn-Beschichtung aus Zinn- und Eisen-Atomen, in der Stöchiometrie FeSn₂). Die Ausbildung dieser Legierungs-Zwischenschicht hat auf die Eigenschaften des beschichteten Stahlbands erhebliche Auswirkungen. Insbesondere erhöht die Ausbildung der Legierungsschicht die Korrosionsbeständigkeit des beschichteten Stahlbands und verbessert die Haftung der Beschichtung am Stahlband.

Durch Vergleichsversuche konnte festgestellt werden, dass mit dem erfindungsgemäßen Veredelungsverfahren insbesondere dann, wenn die Maximaltemperatur höher als 310°C ist, eine besonders stabile und dichte Legierungsschicht ausgebildet wird. Durch Messung des ATC-Werts konnte festgestellt werden, dass diese Legierungsschicht im Vergleich zu den sich bei herkömmlicher Verfahrensführung bildenden Zwischenschichten besonders porenarm und damit dicht ist. Diese dichte Legierungsschicht mit geringerer Porigkeit führt zu einer verbesserten Korrosionsstabilität des beschichteten Stahlbands.

Zu Vergleichszwecken wurden nach herkömmlichen Verfahren hergestellte Weißbleche mit Weißblechen verglichen, die mit dem erfindungsgemäßen Verfahren veredelt worden sind. Hierfür wurden mit einer Zinnauflage von 2,0 bis 8,6 g/m² beschichtete Weißbleche erfindungsgemäß behandelt, wobei in einem Ausführungsbeispiel beim induktiven Aufschmelzen der Beschichtung eine Aufheizrate von 963°C/s und eine Maximaltemperatur (PMT) von 330°C eingestellt worden ist. Der Abstand der beweglichen Aufschmelzeinrichtung zur Kühleinrichtung wurde auf D = 3,9 m eingestellt und das Band wurde mit einer Bandgeschwindigkeit von 700 m/min durch die Bandverzinnungsanlage bewegt. Es wurde dabei eine Legierungsschicht mit einer Schichtdicke erzeugt, welche einer Auflage von 0,8 g/m² entspricht. Das so hergestellte Weißblech wurde mit dem standardisierten ATC-Verfahren hinsichtlich seiner Korrosionsbeständigkeit geprüft und mit dem herkömmlich hergestellten Weißblech verglichen. Herkömmlich hergestelltes Weißblech weist typische Werte von 0,12 (µA/cm² oder mehr für den ATC-Wert ("Alloy Tin Couple"-Wert) auf Die erfindungsgemäß behandelten Weißbleche haben dagegen wesentlich geringere ATC-Werte von weniger als 0,08 µA/cm². Es konnten sogar Weißbleche mit dem erfindungsgemäßen Veredelungsverfahren hergestellt werden, welche ATC-Werte von lediglich noch 0,04 µA/cm² aufweisen. Durch Vergleichsversuche konnte festgestellt werden, dass solch niedrige ATC-Werte insbesondere dann erzielt werden können, wenn die Maximaltemperatur (PMT) oberhalb von 310°C liegt.

## Patentansprüche

1. Verfahren zum Veredeln einer metallischen Beschichtung auf einem Stahlband (1) oder Stahlblech, wobei die Beschichtung durch induktives Erhitzen mittels wenigstens einer Induktionsspule (2) auf eine Maximaltemperatur (PMT) oberhalb der Schmelztemperatur (Ts) des Materials der Beschichtung aufgeschmolzen und anschließend in einer Kühleinrichtung (3) auf eine unterhalb der Schmelztemperatur liegende Abschrecktemperatur (T_{A}) abgekühlt wird, **dadurch gekennzeichnet, dass** die Beschichtung während einer Haltezeit (tₕ) auf einer Temperatur oberhalb der Schmelztemperatur (Tₛ) gehalten wird und dass die Haltezeit (tₕ) durch Verschieben wenigstens einer der Induktionsspulen (2) gegenüber der Kühleinrichtung (3) an die Maximaltemperatur (PMT) und die Dicke der Beschichtung angepasst wird, um die Beschichtung vollständig über ihre gesamte Dicke bis zur Grenzschicht zum Stahlband aufzuschmelzen.

2. Verfahren nach dem Oberbegriff des Anspruchs 1, **dadurch gekennzeichnet, dass** die Maximaltemperatur höher als 310°C ist und dass die Beschichtung vollständig über ihre gesamte Dicke bis zur Grenzschicht zum Stahlband aufgeschmolzen wird.

3. Verfahren nach Anspruch 1 oder 2, **dadurch gekennzeichnet, dass** die Maximaltemperatur (PMT) zwischen 310°C und 360°C und bevorzugt zwischen 320°C und 350°C liegt.

4. Verfahren nach einem der voranstehenden Ansprüche, **dadurch gekennzeichnet, dass** die Aufheizrate des induktiven Erhitzens zwischen 600 K/s und 1300 K/s und bevorzugt zwischen 900 K/s und 1100 K/s liegt.

5. Verfahren nach einem der voranstehenden Ansprüche, **dadurch gekennzeichnet, dass** sich das beschichtete Stahlband (1) mit einer Bandgeschwindigkeit (v_{B}) gegenüber der Induktionsspule (2) bewegt.

6. Verfahren nach einem der voranstehenden Anspräche, **dadurch gekennzeichnet, dass** der Abstand der Induktionsspule (2) zur Kühleinrichtung (3) stufenlos einstellbar ist, um die Haltezeit (tₕ) auf einen gewünschten Wert einzustellen.

7. Verfahren nach einem der voranstehenden Ansprüche, **dadurch gekennzeichnet, dass** die Haltezeit (tₕ) zwischen 0,1 s und 1,0 s und bevorzugt zwischen 0,2 s und 0,3 s liegt.

8. Verfahren nach einem der voranstehenden Ansprüche, **dadurch gekennzeichnet, dass** sich an der Grenzschicht zwischen der Beschichtung und dem Stahlband eine dünne Legierungsschicht ausbildet, welche im Wesentlichen aus Eisenatomen und Atomen des Beschichtungsmaterials besteht.

9. Verfahren nach Anspruch 7, **dadurch gekennzeichnet, dass** die Legierungsschicht dünner als 1,3 g/m² und bevorzugt dünner als 1,0 g/m² ist.

10. Vorrichtung zum Aufbringen einer metallischen Beschichtung auf ein Stahlband, insbesondere Bandverzinnungsanlage, in der ein endloses Stahlband (1) mit einer Bandgeschwindigkeit (v_{B}) in einer Bandlaufrichtung bewegt und in einer Beschichtungseinrichtung (4) elektrolytisch mit einer metallischen Beschichtung versehen wird, wobei der Beschichtungseinrichtung (4) in Bandlaufrichtung eine Aufschmelzeinrichtung (5) mit wenigstens einer darin angeordneten Induktionsspule (2) nachgeordnet ist, in der die Beschichtung durch induktives Erhitzen auf eine Maximaltemperatur (PMT) oberhalb der Schmelztemperatur (Tₛ) des Materials der Beschichtung aufgeschmolzen wird und wobei der Aufschmelzeinrichtung (2) eine Kühleinrichtung (3) nachgeordnet ist, in der das beschichtete Stahlband (1) auf eine unterhalb der Schmelztemperatur liegende Abschrecktemperatur (T_{A}) abgeschreckt wird, **dadurch gekennzeichnet, dass** die Aufschmelzeinrichtung (5) oder zumindest eine der darin angeordneten Induktionsspulen (2) gegenüber der Kühleinrichtung (3) verschiebbar ist, um den Abstand zwischen der Aufschmelzeinrichtung (5) und der Kühleinrichtung (3) in Bandlaufrichtung einzustellen.

11. Vorrichtung nach Anspruch 10, **dadurch gekennzeichnet, dass** die Aufschmelzeinrichtung (5) wenigstens eine in Bandlaufrichtung beweglich angeordnete Induktionsspule (2) enthält.

12. Vorrichtung nach Anspruch 11, **dadurch gekennzeichnet, dass** die Aufschmelzeinrichtung (5) eine Mehrzahl von in Bandlaufrichtung hintereinander angeordnete Induktionsspulen enthält, wobei zumindest die letzte Induktionsspule, welche der Kühleinrichtung (3) am nächsten liegt, bezüglich der Kühleinrichtung (3) verschiebbar ist.

13. Vorrichtung nach Anspruch 10, **dadurch gekennzeichnet, dass** die Kühleinrichtung (3) einen mit einer Kühlflüssigkeit gefüllten Abschrecktank (6) umfasst.

## Claims

1. Method for refining a metal coating on a steel strip (1) or steel sheet, wherein the coating is melted on by inductive heating by means of at least one induction coil (2) to a maximum temperature (PMT) above the melting temperature (Tₛ) of the material of the coating and then cooled in a cooling device (3) to a quenching temperature (T_{A}) lying below the melting temperature, **characterised in that** the coating is held at a temperature above the melting temperature (Tₛ) for a holding time (tₕ) and **in that** the holding time (tₕ) is adapted to the maximum temperature (PMT) and the thickness of the coating by moving at least one of the induction coils (2) in relation to the cooling device (3) in order to melt the coating on completely over its entire thickness down to the boundary layer with the steel strip.

2. Method according to the preamble of claim 1, **characterised in that** the maximum temperature is higher than 310°C and **in that** the coating is melted on completely over its entire thickness down to the boundary layer with the steel strip.

3. Method according to claim 1 or 2, **characterised in that** the maximum temperature (PMT) lies between 310°C and 360°C and preferably between 320°C and 350°C.

4. Method according to one of the preceding claims, **characterised in that** the heat-up rate of the inductive heating lies between 600 K/s and 1300 K/s and preferably between 900 K/s and 1100 K/s.

5. Method according to one of the preceding claims, **characterised in that** the coated steel strip (1) moves at a strip speed (v_{B}) in relation to the induction coil (2).

6. Method according to one of the preceding claims, **characterised in that** the distance of the induction coil (2) to the cooling device (3) is continuously adjustable in order to adjust the holding time (tₕ) to a desired value.

7. Method according to one of the preceding claims, **characterised in that** the holding time (tₕ) lies between 0.1 s and 1.0 s and preferably between 0.2 s and 0.3 s.

8. Method according to one of the preceding claims, **characterised in that** a thin alloy layer, which essentially consists of iron atoms and atoms of the coating material, forms at the boundary layer between the coating and the steel strip.

9. Method according to claim 7, **characterised in that** the alloy layer is thinner than 1.3 g/m² and preferably thinner than 1.0 g/m².

10. Device for applying a metal coating to a steel strip, in particular a strip tinning installation, in which an endless steel strip (1) moves in a strip running direction at a strip speed (v_{B}) and in a coating device (4) is provided electrolytically with a metal coating, wherein the coating device (4) is followed in the strip running direction by a melting-on device (5) with at least one induction coil (2) arranged therein and in which the coating is melted on by inductive heating to a maximum temperature (PMT) above the melting temperature (Tₛ) of the material of the coating and wherein the melting-on device (2) is followed by a cooling device (3) in which the coated steel strip (1) is quenched to a quenching temperature (T_{A}) lying below the melting temperature, **characterised in that** the melting-on device (5) or at least one of the induction coils (2) arranged therein can be moved in relation to the cooling device (3) in order to adjust the distance between the melting-on device (5) and the cooling device (3) in the strip running direction.

11. Device according to claim 10, **characterised in that** the melting-on device (5) comprises at least one induction coil (2) which is arranged so that it can be moved in the strip running direction.

12. Device according to claim 11, **characterised in that** the melting-on device (5) comprises a plurality of induction coils which are arranged one behind another in the strip running direction, wherein at least the last induction coil located nearest the cooling device (3) is moveable in relation to the cooling device (3).

13. Device according to claim 10, **characterised in that** the cooling device (3) comprises a quenching tank (6) filled with a cooling liquid.

## Revendications

1. Procédé aux fins de la finition d'un revêtement métallique sur une bande d'acier (1) ou une tôle d'acier, sachant que le revêtement est fondu par un chauffage par induction au moyen au moins d'une bobine d'inductance (2) à une température maximale (PMT) supérieure à la température de fusion (Tₛ) du matériau du revêtement puis est immédiatement après refroidi dans un dispositif de refroidissement (3) à une température de trempe (T_{A}) inférieure à la température de fusion, **caractérisé en ce que** le revêtement est maintenu, pendant un temps d'arrêt (tₕ), à une température supérieure à la température de fusion (Tₛ), et **en ce que** le temps d'arrêt (tₕ) est adapté à la température maximale (PMT) et à l'épaisseur du revêtement par un coulissement au moins d'une des bobines d'inductance (2) par rapport au dispositif de refroidissement (3) afin de faire fondre le revêtement en totalité sur toute son épaisseur jusqu'à l'interface avec la bande d'acier.

2. Procédé selon le préambule de la revendication 1, **caractérisé en ce que** la température maximale est supérieure à 310°C, et **en ce que** le revêtement est fondu en totalité sur toute son épaisseur jusqu'à l'interface avec la bande d'acier.

3. Procédé selon la revendication 1 ou 2, **caractérisé en ce que** la température maximale (PMT) est comprise entre 310°C et 360°C et, de manière préférée, entre 320°C et 350°C.

4. Procédé selon l'une quelconque des revendications précédentes, **caractérisé en ce que** la vitesse de montée en température du chauffage par induction est comprise entre 600 K/s et 1 300 K/s et, de manière préférée, entre 900 K/s et 1 100 K/s.

5. Procédé selon l'une quelconque des revendications précédentes, **caractérisé en ce que** la bande d'acier (1) revêtue se déplace à une vitesse de bande (v_{B}) par rapport à la bobine d'inductance (2).

6. Procédé selon l'une quelconque des revendications précédentes, **caractérisé en ce que** la distance de la bobine d'inductance (2) par rapport au dispositif de refroidissement (3) peut être réglée de manière continue afin de régler le temps d'arrêt (tₕ) à une valeur souhaitée.

7. Procédé selon l'une quelconque des revendications précédentes, **caractérisé en ce que** le temps d'arrêt (tₕ) est compris entre 0,1 s et 1,0 s et, de manière préférée, entre 0,2 s et 0,3 s.

8. Procédé selon l'une quelconque des revendications précédentes, **caractérisé en ce qu'**est réalisée, au niveau de l'interface entre le revêtement et la bande d'acier, une couche d'alliage fine, qui est constituée essentiellement d'atomes de fer et d'atomes du matériau de revêtement.

9. Procédé selon la revendication 7, **caractérisé en ce que** la finesse de la couche d'alliage est inférieure à 1,3 g/m² et, de manière préférée, inférieure à 1,0 g/m².

10. Dispositif servant à appliquer un revêtement métallique sur une bande d'acier, en particulier installation d'étamage de bande, dans lequel une bande d'acier (1) sans fin est déplacée à une vitesse de bande (v_{B}) dans un sens de défilement de bande et est pourvue d'un revêtement métallique par voie électrolytique dans un dispositif de revêtement (4), sachant qu'un dispositif de fusion (5) comprenant au moins une bobine d'inductance (2) est disposé en aval du dispositif de revêtement (4) dans le sens de défilement de bande, dans lequel le revêtement est fondu par un chauffage par induction à une température maximale (PMT) supérieure à la température de fusion (Tₛ) du matériau du revêtement et sachant qu'est disposé en aval du dispositif de fusion (2) un dispositif de refroidissement (3), dans lequel la bande d'acier (1) revêtue est trempée à une température de trempe (T_{A}) inférieure à la température de fusion, **caractérisé en ce que** le dispositif de fusion (5) ou au moins une des bobines d'inductance (2) disposées dans ce dernier peut être coulissé/coulissée par rapport au dispositif de refroidissement (3) afin de régler la distance entre le dispositif de fusion (5) et le dispositif de refroidissement (3) dans le sens de défilement de bande.

11. Dispositif selon la revendication 10, **caractérisé en ce que** le dispositif de fusion (5) contient au moins une bobine d'inductance (2) disposée de manière mobile dans le sens de défilement de bande.

12. Dispositif selon la revendication 11, **caractérisé en ce que** le dispositif de fusion (5) contient une multitude de bobines d'inductance disposées les unes derrière les autres dans le sens de défilement de bande, sachant qu'au moins la dernière bobine d'inductance, qui est la plus proche du dispositif de refroidissement (3), peut être coulissée par rapport au dispositif de refroidissement (3).

13. Dispositif selon la revendication 10, **caractérisé en ce que** le dispositif de refroidissement (3) comprend un réservoir de trempe (6) rempli d'un liquide de refroidissement.
